# EUROPEAN PATENT APPLICATION

(11) **EP 4 835 670 A1**
(43) Date of publication of application: **04.11.2026**
(21) Application number: 26175211.7
(22) Date of filing: 28.04.2026
(51) Int. Cl.: G06F 9/50, G06F 40/00, G06N 5/02, G06N 5/04, G06Q 10/10, G06Q 10/0631

(54) **GENERATING EXECUTABLE WORKFLOWS USING GENERATIVE ARTIFICIAL INTELLIGENCE MODELS AND GUARDRAILING**

(30) Priority: 28.04.2025 US 202519192112
(71) Applicant: Iterable, Inc., San Francisco, CA 94105 (US)
(72) Inventor: CHEUNG, Sinead, San Francisco, 94105 (US); SATPATHY, Nishant, San Francisco, 94105 (US); TURNER, Nate, San Francisco, 94105 (US); AZZARA, Marissa Elizabeth, San Francisco, 94105 (US); AGARWAL, Ayush, San Francisco, 94105 (US); MA, Nicholas, San Francisco, 94105 (US)
(74) Representative: Morrall, Jonathan Ian McLachlan

(57) **Abstract**

The present disclosure sets forth techniques for generating efficient and valid executable workflows using a generative artificial intelligence model, the computerimplemented method comprising receiving an input prompt specifying an executable operation to be generated using a generative artificial intelligence model. A definition of the executable operation based on the received input prompt is requested from the generative artificial intelligence model and received from the generative artificial intelligence model. The definition of the executable operation is transformed into a directed graph representing the executable operation. The directed graph representing the executable operation is verified based on one or more guardrailing rules defining valid executable operations in an execution environment. Based on validating that the directed graph satisfies the one or more guardrailing rules, the executable operation is deployed for execution in the execution environment.

## Description

### BACKGROUND

### Field of the Various Embodiments

Embodiments of the present disclosure relate generally to generative artificial intelligence models and, more specifically, to techniques for generating valid executable workflows using generative artificial intelligence models.

### Description of the Related Art

Executable workflows generally allow an operation including one or more executable steps to be executed. Executable workflows may be used, for example, to execute automated message campaign workflows used to send electronic messages, such as emails, short message service (SMS) messages, in-application notifications, push notifications, web notifications, and similar items to large numbers of users. A multi-step message campaign involves sending a series of different messages to users. At a given step in the multi-step message campaign, a message is transmitted to a given user if the conditions associated with that given step have been satisfied. For example, a given step could be limited to sending a message only to a user who interacted with a message that was transmitted during a previous step. As another example, a given step could be limited to sending a message to each user after a specified time period of time elapses from when a previous message was transmitted to the user.

An executable workflow, such as a workflow campaign, may be defined as a programmatic campaign that controls the execution of multi-step executable workflows. Each step in the executable workflow corresponds to an action associated with the executable workflow, such as determining when and/or whether to transmit a message to a user, transmitting a message across a given electronic communication channel, updating user information in response to a user interaction with a message, determining the next step to take with respect to a user, and/or the like, and the conditions, if any, associated with the action. Due to the complexity of some workflows, generative artificial intelligence models can be used to generate executable workflows according to an input prompt specifying the properties of the workflow. However, the workflows generated by a generative artificial intelligence model may be computationally inefficient, be an invalid workflow in which some steps of the workflow are unreachable, or otherwise not constitute a valid workflow.

As the foregoing illustrates, what is needed in the art are improved techniques for generating computationally efficient and valid executable workflows using generative artificial intelligence models.

### SUMMARY

One embodiment of the present invention sets forth a technique for generating computationally efficient and valid executable workflows using a generative artificial intelligence model, the computer-implemented method comprising receiving an input prompt specifying an executable operation to be generated using a generative artificial intelligence model. A definition of the executable operation based on the received input prompt is requested from the generative artificial intelligence model and received from the generative artificial intelligence model. The definition of the executable operation is transformed into a directed graph representing the executable operation. The directed graph representing the executable operation is verified based on one or more guardrailing rules defining valid executable operations in an execution environment. Based on validating that the directed graph satisfies the one or more guardrailing rules, the executable operation is deployed for execution in the execution environment.

One technical advantage of the disclosed techniques relative to the prior art is that the disclosed techniques allow for the verification of executable workflows generated by a generative artificial intelligence model against various guardrailing rules defining valid executable workflows. These guardrailing rules may define computational efficiency, coverage, safety, and other rules with which valid executable workflows in an execution environment are expected to comply. Thus, executable workflows generated by a generative artificial intelligence model and validated using these guardrailing rules may be computationally efficient (e.g., in terms of processor utilization, memory utilization, etc.) and allow for each step of a workflow to be reachable during execution. Further, the techniques described herein may allow for related executable workflows to be aggregated and validated against these guardrailing rules to ensure that the aggregated workflow is also a valid and computationally efficient workflow within an execution platform. These technical advantages provide one or more improvements over prior art approaches.

### BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1 illustrates a computer system configured to implement one or more aspects of various embodiments of the present invention.
Figure 2 is a block diagram illustrating generation of an executable workflow and validation of the executable workflow against guardrailing rules, according to some embodiments.
Figures 3A and 3B illustrate the generation of an executable workflow using a generative artificial intelligence model, according to some embodiments.
Figure 4 is a flow diagram of method steps for generating executable workflows using a generative artificial intelligence model and validating executable workflows based on guardrailing rules, according to some embodiments.

### DETAILED DESCRIPTION

In the following description, numerous specific details are set forth to provide a more thorough understanding of the various embodiments. However, it will be apparent to one skilled in the art that the inventive concepts may be practiced without one or more of these specific details.

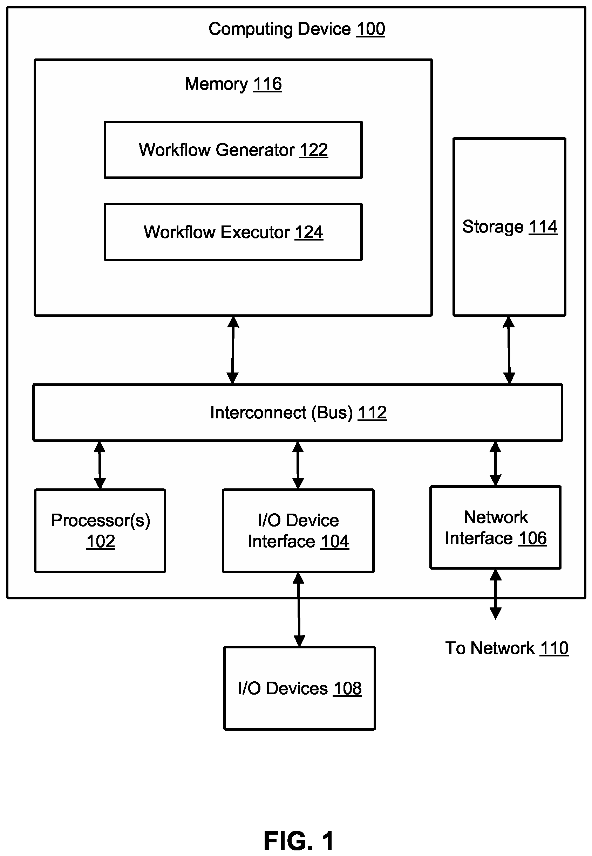

Figure 1 illustrates a computing device 100 configured to implement one or more aspects of various embodiments of the present invention. In one embodiment, computing device 100 includes a desktop computer, a laptop computer, a smart phone, a personal digital assistant (PDA), tablet computer, or any other type of computing device configured to receive input, process data, and optionally display images, and is suitable for practicing one or more embodiments. Computing device 100 is configured to run a workflow generator 122 and a workflow executor 124 that reside in a memory 116.

It is noted that the computing device described herein is illustrative and that any other technically feasible configurations fall within the scope of the present disclosure. For example, multiple instances of workflow generator 122 or workflow executor 124 could execute on a set of nodes in a distributed and/or cloud computing system to implement the functionality of computing device 100. In another example, workflow generator 122 or workflow executor 124 could execute on various sets of hardware, types of devices, or environments to adapt workflow generator 122 or workflow executor 124 to different use cases or applications. In a third example, workflow generator 122 or workflow executor 124 could execute on different computing devices and/or different sets of computing devices.

In one embodiment, computing device 100 includes, without limitation, an interconnect (bus) 112 that connects one or more processors 102, an input/output (I/O) device interface 104 coupled to one or more input/output (I/O) devices 108, memory 116, a storage 114, and a network interface 106. Processor(s) 102 may be any suitable processor implemented as a central processing unit (CPU), a graphics processing unit (GPU), an application-specific integrated circuit (ASIC), a field programmable gate array (FPGA), an artificial intelligence (AI) accelerator, any other type of processing unit, or a combination of different processing units, such as a CPU configured to operate in conjunction with a GPU. In general, processor(s) 102 may be any technically feasible hardware unit capable of processing data and/or executing software applications. Further, in the context of this disclosure, the computing elements shown in computing device 100 may correspond to a physical computing system (e.g., a system in a data center) or may be a virtual computing instance executing within a computing cloud.

I/O devices 108 include devices capable of providing input, such as a keyboard, a mouse, a touch-sensitive screen, a microphone, and so forth, as well as devices capable of providing output, such as a display device or speaker. Additionally, I/O devices 108 may include devices capable of both receiving input and providing output, such as a touchscreen, a universal serial bus (USB) port, and so forth. I/O devices 108 may be configured to receive various types of input from an end-user (e.g., a designer) of computing device 100, and to also provide various types of output to the end-user of computing device 100, such as displayed digital images or digital videos or text. In some embodiments, one or more of I/O devices 108 are configured to couple computing device 100 to a network 110.

Network 110 is any technically feasible type of communications network that allows data to be exchanged between computing device 100 and external entities or devices, such as a web server or another networked computing device. For example, network 110 may include a wide area network (WAN), a local area network (LAN), a wireless (Wi-Fi) network, and/or the Internet, among others.

Storage 114 includes non-volatile storage for applications and data, and may include fixed or removable disk drives, flash memory devices, and CD-ROM, DVD-ROM, Blu-Ray, HD-DVD, or other magnetic, optical, or solid-state storage devices. Workflow generator 122 and workflow executor 124 may be stored in storage 114 and loaded into memory 116 when executed.

Memory 116 includes a random-access memory (RAM) module, a flash memory unit, or any other type of memory unit or combination thereof. Processor(s) 102, I/O device interface 104, and network interface 106 are configured to read data from and write data to memory 116. Memory 116 includes various software programs that can be executed by processor(s) 102 and application data associated with said software programs, including workflow generator 122 or workflow executor 124.

### Example Generating Executable Workflows Using Generative Artificial Intelligence Models and Validating Generated Executable Workflows Based on Guardrailing Rules

Generative artificial intelligence models generally are trained to generate responses in a variety of modalities to a prompt that specifies the parameters of the generated response. Generally, the prompt may be a natural language prompt that describes a desired output of the generative artificial intelligence model, such as a description of a particular concept, an audio output, an image output, or the like. The generative artificial intelligence model can generate an output in response to the prompt based on a corpus of data against which the prompt is processed.

Generative artificial intelligence models may, in some cases, be used to generate executable code or other constructs that allow for the execution of a defined workflow in an execution environment. To do so, a generative artificial intelligence model may be provided with an input prompt describing the actions to be performed when the workflow is executed, triggering events associated with actions to be performed during execution of the workflow, timing information associated with the execution of these actions, and so on. The output of the generative artificial intelligence model may be a code artifact or other construct that embodies the description of the workflow included in the input prompt and can be executed within an execution environment.

While generative artificial intelligence models can generate executable workflows, the workflows generated by these generative artificial intelligence models may not be valid workflows. For example, a valid workflow may be defined as a workflow in which an exit condition is reached for any given input and conditions associated with the input. For workflows that can be represented as a state machine or state graph, a valid workflow may be represented by a graph that does not include a cycle (e.g., where each node representing an execution state is visited once when execution progresses from a starting point to an ending point). Further, a valid workflow may be represented by a graph in which each node in the graph is reachable when the graph is traversed (e.g., each node is connected to at least one other node in the graph). Generally, workflows that include cycles may be computationally inefficient, as such a workflow may result in the repeated execution of operations associated with some nodes. Workflows that include cycles may allow for execution of the workflow to devolve into execution of an infinite loop, which may prevent the executable workflow from being executed for another set of inputs absent external intervention. Meanwhile, workflows that include unreachable execution states may use computing resources (e.g., memory, bandwidth, etc.) for storing and transmitting executable code that will never be executed. Still further, a generative artificial intelligence model can generate executable workflows that fail to satisfy other rules defining valid or safe workflows.

To generate workflows using generative artificial intelligence models that are computationally efficient and satisfy rules defining valid or safe workflows, embodiments presented herein provide techniques for generating executable workflows based on a generative artificial intelligence model and evaluation of a workflow against defined guardrailing rules prior to deployment. Generally, guardrailing rules defined for a workflow may define parameters of valid and invalid executable workflows. For example, these rules may operate against a graph representation of an executable workflow to determine whether the graph representation includes a cyclic path, unreachable states, or other features corresponding to an invalid executable workflow or a workflow that otherwise has the potential to waste computing resources when executed. If an executable workflow is determined to violate one or more guardrailing rules, the executable workflow can be blocked from deployment to an executable environment. Thus, embodiments presented herein can generate computationally efficient executable workflows and minimize, or at least reduce, the computational expense of executing workflows generated by a generative artificial intelligence model.

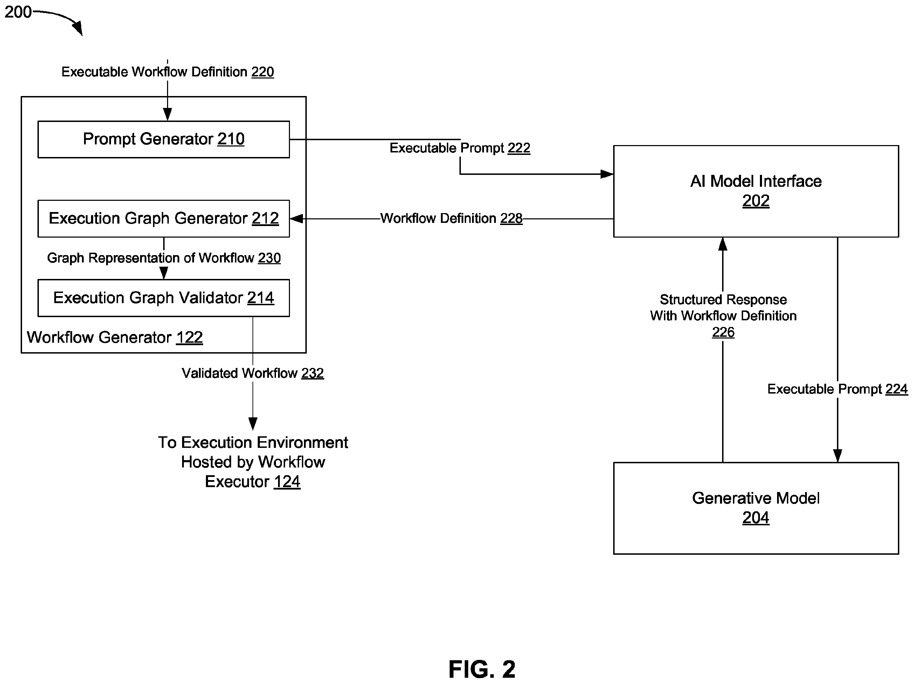

Figure 2 is a block diagram 200 illustrating generation of an executable workflow and validation of the executable workflow against guardrailing rules, according to some embodiments.

As illustrated, workflow generator 122 interfaces with a generative model 204 via an AI model interface 202. While a single generative model 204 is illustrated in Figure 2, it should be recognized that AI model interface 202 may allow workflow generator to request the generation of an executable workflow from any of a plurality of generative models 204. AI model interface 202 may expose, for example, functions for invoking inference operations from each of a plurality of generative models 204 workflow generator 122 can use to generate an executable workflow. In some embodiments, AI model interface 202 can also or alternatively expose a single function that ingests an input prompt and an indication of a generative model 204 to be used in generating an executable workflow and routes the input prompt to the indicated generative model 204.

To generate and validate an executable workflow against guardrailing rules defining a valid executable workflow, prompt generator 210 of workflow generator 122 receives an executable workflow definition 220 specifying the properties of the executable workflow to be generated by a generative model 204. In some embodiments, the executable workflow definition 220 may be a natural language prompt describing a new executable workflow to be generated using the generative artificial intelligence model. The executable workflow definition 220 may define a set of actions to be performed when the executable workflow is executed by workflow executor 124 and conditions for performing actions in the set of actions. More generally, the executable workflow definition 220 may be a description of actions that can be converted by a generative artificial intelligence model into a graph representation of the workflow. Within the graph, different states are represented by nodes, and transitions between states are represented by connections between nodes.

In some embodiments, the executable workflow definition 220 may be a natural language prompt describing a modification to definition of an extant executable workflow. In such a case, the executable workflow definition 220 may specify the portion of the extant executable workflow to be replaced and describe the new functionality that is to replace the specified portion of the extant executable workflow. For example, in an environment in which a graph representation of the extant executable workflow is displayed, the specification of the portion of the extant executable workflow may include a natural language description of the portion to be replaced, a selection of nodes in the graph to be replaced, or the like.

Prompt generator 210 generates an executable prompt 222 based on the executable workflow definition 220 and contextual information for the generative model 204 to use in generating the executable workflow. The contextual information generally allows for the generative artificial intelligence model to generate an executable workflow that executes on workflow executor 124 using zero-shot training techniques. That is, the contextual information may allow a generative artificial intelligence model that is not trained on a corpus of data associated with valid executable workflows (e.g., a general-purpose generative artificial intelligence model) to generate executable workflows for workflow executor 124. For example, the contextual information may provide information about the structure of an executable workflow. The structure may include, for example, information defining valid types of executable nodes in a graph representation of an executable workflow, valid types of tiles representing executable actions in an executable workflow, or the like.

Prompt generator 210 may also add example valid workflow definitions as contextual information for the generative model 204 to use in generating the executable workflow. The example valid workflow definitions may include workflow definitions defined *a priori* that comply with the formatting and guardrailing rules (discussed in further detail below) or workflow definitions generated by a generative model 204 and validated against the guardrailing rules, amongst others. Generally, the example valid workflow definitions may be associated with input prompts that describe the desired behaviors of the valid workflow definitions.

In some embodiments, the contextual information included in the executable prompt 222 may further include additional information defining valid and invalid executable workflows. This additional information may include, for example, restrictions on workflows that the generative model 204 can generate (e.g., workflows that are not executable by the workflow executor 124, such as non-communication-related workflows for a workflow executor 124 that is configured to generate and transmit messages based on user state information). In some embodiments, the additional information may include valid or invalid topics for workflows generated by the generative model 204 (e.g., an allowlist or blocklist of words or topics for which executable workflows can be generated).

After prompt generator 210 generates an executable prompt 222 including the workflow definition 220 and contextual information that the generative model 204 can use to generate an executable workflow using zero-shot training techniques, prompt generator 210 dispatches the executable prompt to AI model interface 202 for routing. As discussed, AI model interface 202 may provide an interface through which workflow generator 122 invokes generative inference operations using a generative model 204. The executable prompt 222 may include, for example, information identifying the generative model that is to be used in generating an executable workflow. Using the information identifying the generative model, AI model interface 202 forwards the executable prompt 222 as executable prompt 224 to the appropriate generative model 204 for execution.

Subsequently, generative model 204 outputs a structured response 226 to AI model interface 202, and AI model interface 202 forwards the workflow definition 228 included in the structured response 226 to workflow generator 122 for processing. Generally, the structured response 226 including the workflow definition 228 may define an executable workflow in a parseable format (e.g., in a JavaScript Object Notation (JSON) file, in an eXtendible Markup Language (XML) file, or other parseable file format). Execution graph generator 212 uses the workflow definition 228 to generate a graph representation of the executable workflow by converting the definition of the executable workflow in the parseable format to a graph definition.

In some embodiments, execution graph generator 212 converts the definition of the executable workflow from the parseable format to the graph definition using a two-step conversion process. In a first step, the execution graph generator 212 converts the definition of the executable workflow from the parseable format to an intermediate definition. The conversion from the parseable format to the intermediate definition may be performed based on a schema mapping constructs in the parseable format to corresponding constructs in the intermediate format. Generally, the constructs defined for the intermediate format may correspond to different nodes or functional tiles that can be executed by the workflow executor 124. The schema that maps constructs in the parseable format to corresponding constructs in the intermediate format may map multiple source constructs in the parseable format to each construct in the intermediate format. In some embodiments, each construct in the intermediate format may be mapped to a corresponding node or functional tile (e.g., each construct in the intermediate format may have a one-to-one or many-to-one relationship with the corresponding node or functional tile executable in an execution environment provided by workflow executor 124).

Within the parseable format, each action to be performed may be associated with parameters defining when the action is performed. For example, an action defined in the executable workflow generated by generative model 204 may be defined in terms of a triggering action or condition based on which the action is to be performed. For example, a triggering action may include detecting that a user has performed a defined task within an execution environment (e.g., a user has subscribed to a messaging workflow executed by the execution environment), and a condition based on which the action is to be performed may be related to state information associated with the user. Generally, properties defining an executable action such as actions triggering execution of the action or conditions used to define if or whether the action is performed may be mapped from the definition of an action in the parseable format to corresponding properties in the definition of the workflow in the intermediate format.

Execution graph generator 212 generally uses the definition of the executable workflow in the intermediate format to generate a graph representation 230 representing the executable workflow. Generally, each action included in the intermediate format may be converted from action definitions in the intermediate format to node or executable tile definitions for the graph representation 230 representing the executable workflow. Connections between different nodes in the graph representation 230 may be generated based on information in the intermediate format defining source and destination nodes in a graph for any given action or state defined in the intermediate format. For example, if the definition of the executable workflow includes a waiting for timer expiration action node and nodes that are executed based on the timer expiration action node being triggered, the nodes executed based on the timer expiration action node being triggered may be included in the executable graph as destination nodes to the waiting for timer expiration action node.

After execution graph generator 212 generates the graph representation 230 representing the executable workflow, execution graph generator 212 provides the graph representation 230 representing the executable workflow to execution graph validator 214 for processing. Generally, execution graph validator 214 evaluates the graph representation 230 representing the executable workflow against one or more guardrailing rules to determine whether the graph representation 230 representing the executable workflow represents a valid executable workflow. If execution graph validator 214 determines that the graph representation 230 representing the executable workflow is a valid executable workflow, then execution graph validator 214 deploys the graph representation 230 representing the executable workflow to workflow executor 124. Otherwise, execution graph validator 214 can block deployment of the graph representation 230 representing the executable workflow to workflow executor 124. In some embodiments, when execution graph validator 214 determines that the graph representation 230 representing the executable workflow violates a guardrailing rule, execution graph validator 214 can output a message identifying the guardrailing rule that was violated and the portion of the executable workflow that violates the guardrailing rule. In some embodiments, the message may request that a user confirm whether execution of the workflow is still allowable. If execution graph validator 214 receives a response indicating that execution of a workflow that violates a guardrailing rule is allowable, then the execution graph validator 214 can deploy the validated workflow 232 to workflow executor 124.

In some embodiments, the guardrailing rules used by execution graph validator 214 may define valid and invalid workflows in terms of computational efficiency. For example, a graph defining an executable workflow that includes a cycle (e.g., a path in which a node or tile in the graph is visited multiple times) may be considered computationally inefficient and thus an invalid workflow for a number of reasons. First, because actions associated with nodes that are part of a cycle are potentially executed repeatedly based on the same or similar input data, these actions may result in replicated computation and thus inefficient usage of computing resources (e.g., processor cycles, memory, power, etc.). Second, because a cycle may not have a defined exit path out of the cycle, the presence of a cycle in a graph representation of an executable workflow may use computing resources without generating a useful result or reaching a state at which the executable workflow terminates. In another example, a graph defining an executable workflow that includes an unreachable node or tile may be considered computationally inefficient and thus an invalid workflow. Such a workflow may be considered computationally inefficient because executable code associated with an unreachable node or tile in the executable workflow may use persistent and temporary memory resources that could be used for other data. Of course, it should be recognized that the foregoing are merely examples of guardrailing rules defining valid and invalid workflows in the context of computational efficiency, and other guardrailing rules may exist.

To determine whether a graph representation of an executable workflow corresponds to a valid or invalid workflow in the context of computational efficiency, execution graph validator 214 can traverse the graph representation using depth-first techniques. Generally, in traversing the graph representation of the executable workflow, execution graph validator 214 can maintain a count of the number of times that each node in the graph representation is reached during traversal. If a node has a visit count greater than 1, execution graph validator 214 can determine that the graph representation of the executable workflow violates a guardrailing rule restricting the deployment of cyclic workflows to workflow executor 124. If a node has a visit count of 0 after traversal of the graph representation, execution graph validator 214 can determine that the graph representation of the executable workflow violates a guardrailing rule restricting the deployment of workflows with unreachable nodes to workflow executor 124.

In some embodiments, the guardrailing rules used by execution graph validator 214 may validate the graph representation of the executable workflow against additional rules defining valid or invalid workflows. For example, the guardrailing rules may validate the graph representation of the executable workflow against rules defining safe or unsafe sources of data. In another example, the guardrailing rules may validate the functionality of the executable workflow against the definition of the workflow included in the executable workflow definition 220. Of course, it should be recognized that the foregoing are but examples of guardrailing rules that execution graph validator 214 can use to determine whether an executable workflow is valid, and the use of other guardrailing rules for validating executable workflows may be contemplated.

In some embodiments, an executable workflow generated by the generative model 204 can reference other executable workflows that have been defined *a priori.* To determine whether the graph representation 230 of the executable workflow is a valid workflow, execution graph generator 212 can generate a consolidated graph including a graph definition of the executable workflow generated from the output of the generative model 204 and the graph definition(s) of referenced workflows. For example, if a node in the graph definition of the executable workflow generated from the output of the generative model 204 references another executable workflow, execution graph generator 212 can retrieve the graph definition of the referenced executable workflow. Execution graph generator 212 can generate the graph representation 230 of the executable workflow based on replacing the node referencing the other executable workflow with the graph definition of the referenced executable workflow. In such a case, the graph representation 230 of the executable workflow may be a consolidated graph incorporating a newly generated workflow and the referenced executable workflow. In some embodiments, in generating the consolidated graph, execution graph generator 212 can deduplicate the graph to identify repeated nodes in the graph. In such a case, nodes with the same node identifier or nodes associated with the same type of action and triggering conditions for executing the action may be consolidated into a single node.

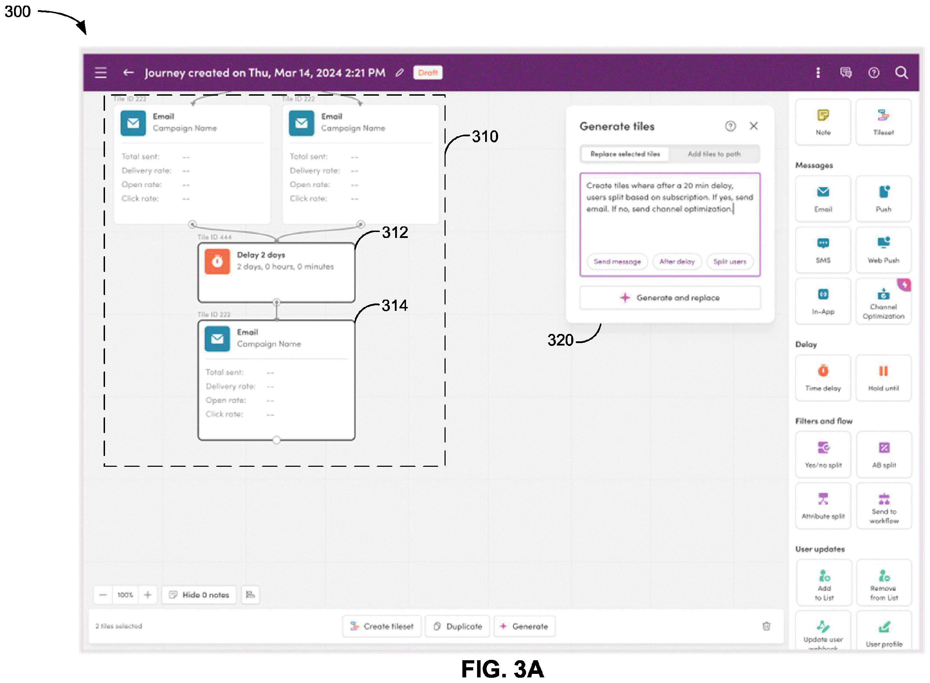

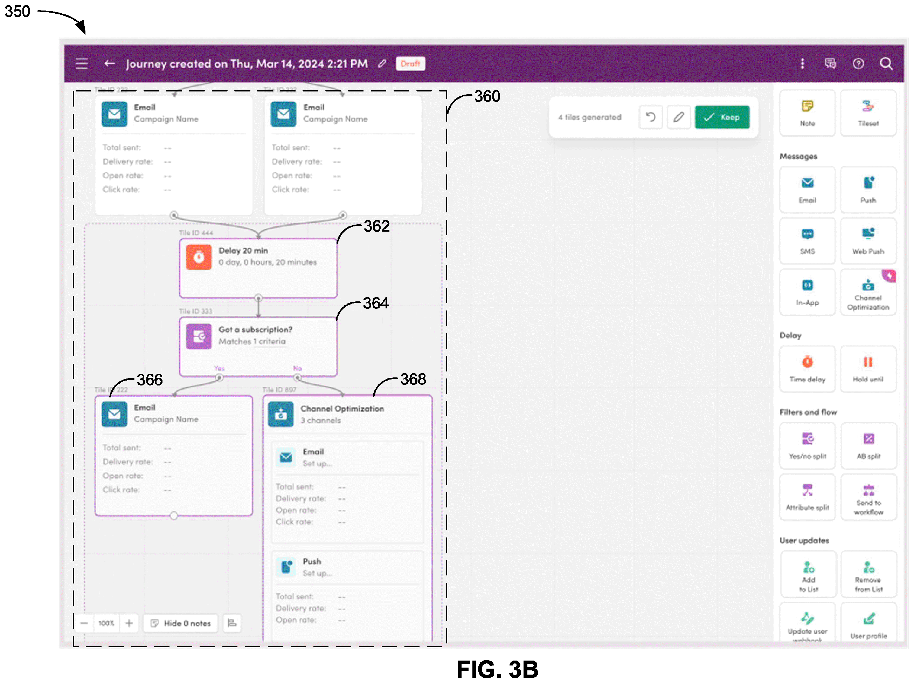

Figures 3A and 3B illustrate the generation of an executable workflow using a generative artificial intelligence model, according to some embodiments.

Interface 300 illustrates an interface in which a graph representation of a workflow 310 is used as a basis for generating a modified workflow using a generative artificial intelligence model. As illustrated, the workflow 310 includes a plurality of nodes, of which nodes 312 and 314 (also referred to as tiles) are selected. The selection of nodes 312 and 314 generally specifies nodes that are to be replaced by nodes generated using generative model 204. For example, the textual prompt 320 specifies that the selected nodes 312 and 314 are to be replaced by one or more nodes that perform a specified function. In this example, the specified function may be to split users into different cohorts or groups based on user state (e.g., whether or not the user has subscribed to a messaging channel), and after a specified delay period, different actions are to be taken based on user state.

Interface 350 illustrates an interface in which a graph representation of the modified workflow 360 is rendered. In the modified workflow 360, the executable workflow generated by the generative model 204 in response to textual prompt 320 replaces nodes 312 and 314 with nodes 362, 364, 366, and 368. Node 362 may correspond to waiting until expiry of the specified delay period. Node 364 may correspond to the partitioning of users into different cohorts or groups based on user state. Finally, nodes 366 and 368 may correspond to the actions performed based on the partitioning of users into the different cohorts or groups (e.g., sending a message to users who have subscribed to a messaging channel, or performing a different task for users who have not subscribed to the messaging channel).

Execution graph validator 214 can determine that the modified workflow 360 is a valid workflow by traversing through the graph representing the modified workflow 360. During traversal of the graph representing the modified workflow 360, it can be seen the node 362 is reached once, node 364 is reached once, node 366 is reached once, and node 368 is reached once. Because no node in the graph representing the modified workflow 360 is reached multiple times, execution graph validator 214 can determine that the modified workflow 360 does not include a cycle and thus satisfies a guardrailing rule that restricts the generation of workflows including cycles. Further, because no node in the graph representing the modified workflow 360 is unreachable, execution graph validator 214 can determine that the modified workflow 360 satisfies a guardrailing rule that restricts the generation of workflows including unreachable nodes in a graph representation of the workflow.

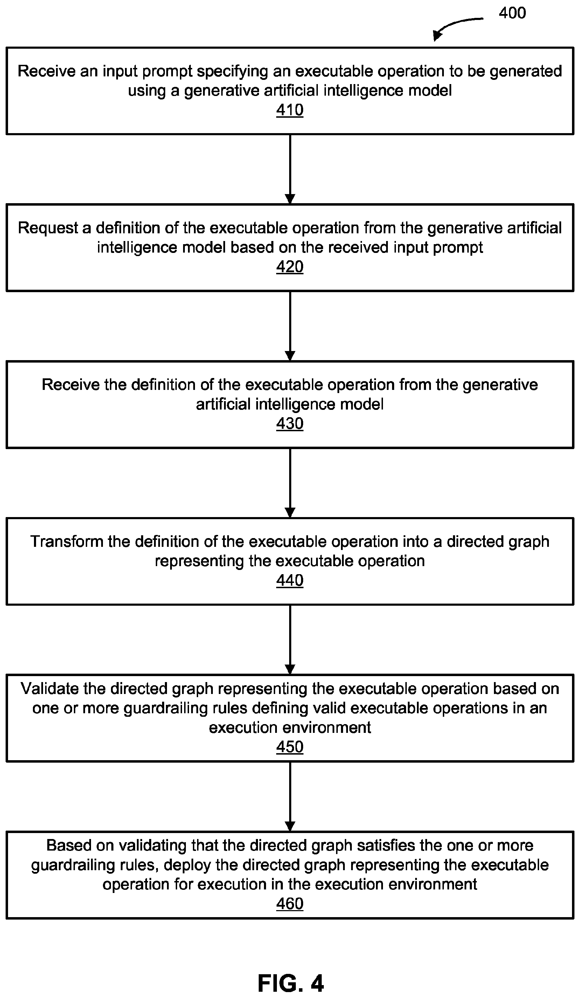

Figure 4 is a flow diagram of operations 400 for generating executable workflows using a generative artificial intelligence model and validating executable workflows based on guardrailing rules, according to some embodiments. Operations 400 may be performed, for example, by a workflow generator that orchestrates the generation of workflows by a generative model and validates the generated workflow against guardrailing rules, such as workflow generator 122 illustrated in Figure 1.

As illustrated, operations 400 begin at block 410, where workflow generator 122 receives an input prompt specifying an executable operation to be generated using a generative artificial intelligence model. In some embodiments, the input prompt may be a natural language prompt describing the executable workflow. The natural language prompt may describe actions to be performed using the executable workflow, conditions based on which different actions are to be performed, and the like.

At block 420, workflow generator 122 requests a definition of the executable operation from the generative artificial intelligence model based on the received input prompt.

In some embodiments, to request the definition of the executable operation, workflow generator 122 generates a prompt including information from the input prompt specifying the executable operation to be generated and contextual information for the generative artificial intelligence model to use in generating the definition of the executable operation. Workflow generator 122 can then output or otherwise dispatch the generated prompt to the generative artificial intelligence model for processing.

In some embodiments, the contextual information may include information specifying valid executable actions in an execution environment (e.g., provided by workflow executor 124 illustrated in Figure 1) and a set of sample executable operations constituting valid operations executable within the execution environment. The valid executable actions in the execution environment may include information defining discrete actions that can be performed in the execution environment and can be represented as individual nodes in a graph representation of an executable operation. The set of sample executable operations may include graph representations of the executable operations and corresponding natural language descriptions of the executable operations in the set of executable operations. Each executable operation in the set of executable operations may include one or more of the executable actions included in the set of valid executable actions in the execution environment.

In some embodiments, workflow generator 122 requests the definition of the executable operation by dispatching the input prompt, including the contextual information, to a general-purpose generative artificial intelligence model. The contextual information, as discussed above, allows for zero-shot training of the generative artificial intelligence model so that a generative model trained on to generate responses to a wide variety of input prompts can be used to generate definitions of an executable workflow according to the contextual information included in a prompt.

In some embodiments, the contextual information includes one or more guardrailing rules restricting an output of the generative artificial intelligence model to outputs corresponding to executable operations in the execution environment.

At block 430, workflow generator 122 receives the definition of the executable operation from the generative artificial intelligence model.

At block 440, workflow generator 122 transforms the definition of the executable operation into a directed graph representing the executable operation.

In some embodiments, the definition of the executable operation may be received as a textual output in a structured format. For example, the definition of the executable operation may be a textual output in a parseable file, such as a JSON file, an XML file, or the like. To transform the definition of the executable operation into the directed graph, workflow generator 122 can generate an intermediate representation of the executable operation based on the textual output of the generative artificial intelligence model in the structured format. Workflow generator 122 can then convert the intermediate representation of the executable operation into a schema defining the executable operation.

In some embodiments, the schema comprises a set of graphical tiles, each respective graphical tile in the set of graphical tiles corresponding to a respective executable action in the execution environment. As discussed, the schema may map one or more actions defined in a schema for the intermediate format into which textual output of the generative artificial intelligence model is converted to graphical tiles or other executable actions on a one-to-one or many-to-one basis. In some embodiments, a schema may also be used to convert the textual output of the generative artificial intelligence model to the intermediate format. This schema may define how actions described by the generative model are translated into actions in the intermediate format.

In some embodiments, workflow generator 122 transforms the definition of the executable operation into a directed graph based on generating a first directed graph including a plurality of nodes corresponding to executable actions in the execution environment. When a node in the first directed graph is identified as referencing another executable operation represented by a second directed graph, workflow generator 122 generates the directed graph based on replacing the node in the first directed graph with the second directed graph.

At block 450, workflow generator 122 validates the directed graph representing the executable operation based on one or more guardrailing rules defining valid executable operations in an execution environment.

In some embodiments, the one or more guardrailing rules defining valid executable operations in the execution environment comprises rules prohibiting the directed graph from including cyclic operations.

In some embodiments, the one or more guardrailing rules defining valid executable operations in the execution environment comprises rules prohibiting the directed graph from including operations unreachable from other operations in the directed graph.

At block 460, workflow generator 122 deploys, based on validating (or otherwise confirming) that the directed graph satisfies the one or more guardrailing rules, the executable operation for execution in the execution environment.

In some embodiments, operations 400 further include the workflow generator 122 determining that the directed graph representing the executable operation violates at least one of the one or more guardrailing rules. Based on determining that the directed graph violates at least one of the one or more guardrailing rules, workflow generator 122 can block deployment of the executable operation to the execution environment. In some embodiments, workflow generator 122 can generate, based on evaluating the directed graph against the one or more guardrailing rules, a description of why the directed graph violates at least one of the one or more guardrailing rules and output the description. As discussed, outputting the description of why the directed graph violates at least one of the one or more guardrailing rules may be accompanied by a request to bypass the guardrailing rules and thus allow the workflow to be deployed to the execution environment.

The techniques presented herein generally allow for generative artificial intelligence models to generate executable code that is computationally efficient, safe, and complies with other rules defined for valid executable workflows in an execution environment. The generated workflows may have entry and exit points during execution and may not result in the waste of computing resources from execution of cyclic paths or the presence of unreachable code in memory. Thus, computing resources, such as processor cycles, memory, network bandwidth, power, and the like may be conserved for use in other operations. Further, the use of guardrailing rules to validate the correctness and safety of an executable workflow generated by a generative model may also prevent unsafe operations, such as infinite loops or the like, from execution when the executable workflow is deployed to an execution environment.

### Example Clauses

Implementation details of various embodiments of the present disclosure are provided in the following numbered clauses:
1. In some embodiments, a computer-implemented method for generating an executable workflow using a generative artificial intelligence model, the computer-implemented method comprises receiving an input prompt specifying an executable operation to be generated using a generative artificial intelligence model; requesting, from the generative artificial intelligence model, a definition of the executable operation based on the received input prompt; receiving the definition of the executable operation from the generative artificial intelligence model; transforming the definition of the executable operation into a directed graph representing the executable operation; validating the directed graph representing the executable operation based on one or more guardrailing rules defining valid executable operations in an execution environment; and based on validating that the directed graph satisfies the one or more guardrailing rules, deploying the executable operation for execution in the execution environment.
2. The method of clause 1, wherein requesting the definition of the executable operation based on the received input prompt comprises: generating a prompt including information from the input prompt specifying the executable operation to be generated and contextual information for the generative artificial intelligence model to use in generating the definition of the executable operation; and dispatching the generated prompt to the generative artificial intelligence model for processing.
3. The method of clause 2, wherein the contextual information comprises information specifying valid executable actions in the execution environment and a set of sample executable operations constituting valid operations executable within the execution environment.
4. The method of clause 3, wherein requesting the definition of the executable operation comprises dispatching the input prompt, including the contextual information, to a general-purpose generative artificial intelligence model.
5. The method of any of clauses 2 through 4, wherein the contextual information comprises one or more guardrailing rules restricting an output of the generative artificial intelligence model to outputs corresponding to executable operations in the execution environment.
6. The method of any of clauses 1 through 5, wherein: the definition of the executable operation comprises a textual output in a structured format; and transforming the definition of the executable operation into the directed graph comprises: generating an intermediate representation of the executable operation based on the textual output of the generative artificial intelligence model in the structured format; and converting the intermediate representation of the executable operation into a schema defining the executable operation.
7. The method of clause 6, wherein the schema comprises a set of graphical tiles, each respective graphical tile in the set of graphical tiles corresponding to a respective executable action in the execution environment.
8. The method of any of clauses 1 through 7, wherein the one or more guardrailing rules defining valid executable operations in the execution environment comprises rules prohibiting the directed graph from including cyclic operations.
9. The method of any of clauses 1 through 8, wherein the one or more guardrailing rules defining valid executable operations in the execution environment comprises rules prohibiting the directed graph from including operations unreachable from other operations in the directed graph.
10. The method of any of clauses 1 through 9, wherein transforming the definition of the executable operation into a directed graph comprises: generating a first directed graph including a plurality of nodes corresponding to executable actions in the execution environment; identifying a node in the first directed graph referencing another executable operation representing by a second directed graph; and generating the directed graph based on replacing the node in the first directed graph with the second directed graph.
11. The method of any of clauses 1 through 10, further comprising: determining that the directed graph representing the executable operation violates at least one of the one or more guardrailing rules; and based on the determining, blocking deployment of the executable operation to the execution environment.
12. The method of clause 11, further comprising: generating, based on evaluating the directed graph against the one or more guardrailing rules, a description of why the directed graph violates at least one of the one or more guardrailing rules; and outputting the description.
13. A processing system, comprising: at least one memory having executable instructions stored thereon; and one or more processors configured to execute the executable instructions to cause the processing system to perform the operations of any of clauses 1 through 12.
14. A processing system, comprising: means for performing the operations of any of clauses 1 through 12.
15. A non-transitory computer-readable medium having executable instructions stored thereon which, when executed by one or more processors, performs the operations of any of clauses 1 through 12.

Any and all combinations of any of the claim elements recited in any of the claims and/or any elements described in this application, in any fashion, fall within the contemplated scope of the present invention and protection.

The descriptions of the various embodiments have been presented for purposes of illustration but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general-purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A processor-implemented method, comprising:
receiving an input prompt specifying an executable operation to be generated using a generative artificial intelligence model;
requesting, from the generative artificial intelligence model, a definition of the executable operation based on the received input prompt;
receiving the definition of the executable operation from the generative artificial intelligence model;
transforming the definition of the executable operation into a directed graph representing the executable operation;
validating the directed graph representing the executable operation based on one or more guardrailing rules defining valid executable operations in an execution environment; and
based on validating that the directed graph satisfies the one or more guardrailing rules, deploying the executable operation for execution in the execution environment.

2. The method of claim 1, wherein requesting the definition of the executable operation based on the received input prompt comprises:
generating a prompt including information from the input prompt specifying the executable operation to be generated and contextual information for the generative artificial intelligence model to use in generating the definition of the executable operation; and
dispatching the generated prompt to the generative artificial intelligence model for processing.

3. The method of claim 2, wherein the contextual information comprises information specifying valid executable actions in the execution environment and a set of sample executable operations constituting valid operations executable within the execution environment.

4. The method of claim 3, wherein requesting the definition of the executable operation comprises dispatching the input prompt, including the contextual information, to a general-purpose generative artificial intelligence model.

5. The method of any of claims 2 to 4, wherein the contextual information comprises one or more guardrailing rules restricting an output of the generative artificial intelligence model to outputs corresponding to executable operations in the execution environment.

6. The method of any preceding claim, wherein:
the definition of the executable operation comprises a textual output in a structured format; and
transforming the definition of the executable operation into the directed graph comprises:
generating an intermediate representation of the executable operation based on the textual output of the generative artificial intelligence model in the structured format; and
converting the intermediate representation of the executable operation into a schema defining the executable operation.

7. The method of claim 6, wherein the schema comprises a set of graphical tiles, each respective graphical tile in the set of graphical tiles corresponding to a respective executable action in the execution environment.

8. The method of any preceding claim, wherein the one or more guardrailing rules defining valid executable operations in the execution environment comprises rules prohibiting the directed graph from including cyclic operations.

9. The method of any preceding claim, wherein the one or more guardrailing rules defining valid executable operations in the execution environment comprises rules prohibiting the directed graph from including operations unreachable from other operations in the directed graph.

10. The method of any preceding claim, wherein transforming the definition of the executable operation into a directed graph comprises:
generating a first directed graph including a plurality of nodes corresponding to executable actions in the execution environment;
identifying a node in the first directed graph referencing another executable operation representing by a second directed graph; and
generating the directed graph based on replacing the node in the first directed graph with the second directed graph.

11. The method of any preceding claim, further comprising:
determining that the directed graph representing the executable operation violates at least one of the one or more guardrailing rules; and
based on the determining, blocking deployment of the executable operation to the execution environment.

12. The method of claim 11, further comprising:
generating, based on evaluating the directed graph against the one or more guardrailing rules, a description of why the directed graph violates at least one of the one or more guardrailing rules; and
outputting the description.

13. A processing system, comprising:
at least one memory having executable instructions stored thereon; and
one or more processors configured to execute the executable instructions to cause the processing system to carry out the method of any preceding claim.

14. A computer-readable medium having executable instructions stored thereon which, when executed by one or more processors, performs the method of any of claims 1 to 12.
